# EUROPEAN PATENT SPECIFICATION

(11) **EP 0 751 854 B1**
(45) Date of publication and mention of the grant of the patent: **11.02.1998**
(21) Application number: 95914623.4
(22) Date of filing: 21.03.1995
(51) Int. Cl.: B27M 1/06, B27K 5/00, B05D 3/06

(54) **A METHOD AND APPARATUS FOR PRODUCING A WOOD SURFACE**
VERFAHREN UND VORRICHTUNG ZUM HERSTELLEN EINER HOLZOBERFLÄCHE
APPAREIL ET PROCEDE DE TRAITEMENT D'UNE SURFACE DE BOIS

(30) Priority: 21.03.1994 SE 9400934
(43) Date of publication of application: 08.01.1997
(73) Proprietor: Seltman, Joachim W. O., 144 37 Rönninge (SE)
(72) Inventor: Seltman, Joachim W. O., 144 37 Rönninge (SE)
(74) Representative: Forssell, Gunilla
(86) International application number: SE9500288
(87) International publication number: WO9525621

(56) References cited:
- SE-B- 455 062
- US-A- 4 943 700
- US-A- 5 190 791

## Description

The present invention relates to a method of the kind defined in the preamble of Claim 1, and to an apparatus for carrying out the method.

When sawing wood or when treating wood surfaces, there is left precisely on the surface of the wood a layer of torn and damaged wood fibres, notwithstanding the fineness of the saws or the fineness of other cutting tools used. These fibre parts, or deformed tracheids, occur in the form of surface fluff and make it difficult for paint and glue to adhere to the surface, because they are unable to penetrate through the fluff and enter the cell structure of the firm or solid wood surface located underneath. Outdoor wooden surfaces, such as window frames and the like, in particular, need repainting relatively often, since the "fluff" absorbs moisture and lifts up in humid weather conditions, thereby causing the paint to loosen and flake-off together with part of the fluff. Wood surfaces, and then in particular end-grain wood surfaces, i.e. surfaces which have been cut transversely to the direction or stratification of the wood fibres, cannot be effectively glued together, without scarfing or splicing the wood surfaces in such cases.

There has long been a need for working the outermost layer of a wood surface in a simple and positive fashion in a manner to expose wood which is completely undamaged. This applies both to cross-cut surfaces and to surfaces which extend in the direction of the wood fibres.

U.S. 4,943,700 teaches a method of treating wood with pulsated laser light, although in this case the intention is to cut through a wooden element and also to obtain a self-sealing and "heat-polished" structure on the cut surface, in order to enclose moisture in the material, i.e. as distinct from an open pore surface structure.

### OBJECT OF THE INVENTION

One object of the present invention is to provide a wood surface having an effective anchorage for glue and/or paint or other kind of coatings and/or to arrest commenced crack functions.

A further object of the invention is to provide a wood treatment process which will enable two end-grain surfaces to be glued durably together.

Another object of the invention is to provide a wood treatment process which will enable paint to adhere effectively to a wood surface, e.g. to an end-wood surface or to a surface which extend along the wood fibres.

Still another object of the invention is to provide a wood treatment process in which surface fluff is removed mechanically, with the particular intention of reducing fibre lift after applying glue, paint, plastic, varnish and the like to the surface.

A further object of the invention is to prevent beginning crushed zones in wood from further development.

### DISCLOSURE OF THE INVENTION

The aforesaid objects are achieved with a method of the kind defined in Claim 1 and with the apparatus defined in claim 6. Further properties and further developments of the method and apparatus for carrying out the method are set forth in the remaining Claims.

According to the invention, the wood is irradiated with high power pulsated light, so as to break the covalent bonds in the irradiated material and the irradiated material is therewith released from the surface. When irradiating a mechanically worked wood surface to expose an underlying surface, i.e. ablate said surface, it has been observed experimentally that breaking of covalent bonds can be caused to occur primarily in the damaged and therewith weakened wood fibres on said surface, by suitable selection of a combination of beam strength, pulse frequency, wavelength range and combined irradiation time.

IR lasers or visible light lasers can be used advantageously, since these types of lasers can be easily handled. In this case, however, it is important that the beam is sufficiently strong to cause irradiated particles to release directly from the surface and possibly be atomized or pulverized externally of said surface. Otherwise, the particles are liable to fuse together, an occurrence that shall be avoided. However, it is technically advantageous to irradiate the surface with a UV laser. An excimer laser operating with the gas KrF is a typical commercial laser and therefore relatively inexpensive. It produces a wavelength of 248 nm and can be used very effectively, although shorter wavelengths, albeit with subsequently higher laser photon energies, can be obtained with the gases KrCl, ArF or F₂. However, it is necessary to remain in the wavelength range that will cause covalent bonds to break, and thus not to use wavelength ranges down to the X-ray radiation region, since such wavelength ranges will have an influence on the electrons in the inner rings of the atoms instead of solely in the outer rings. However, UV lasers are not totally safe to work with, which makes such lasers less usable unless they can be fully encapsulated in the region in which work is carried out.

Tests carried out with excimer lasers have shown clearly that excimer lasers are well-suited for treating or working wood. It has been observed that the tracheids deformed by earlier mechanical working of the wood, for instance in when cutting transversely to the grain, have been ablated or removed by UV-radiation to a level at which the wood structure is undamaged.

Corresponding working of the wood has also been achieved on tangential and radial wood surfaces. That the UV laser-induced ablation takes place by breaking covalent bonds within the wood material is proved by the fact that the resultant wood surface is totally clean, and thus not burned, and by the fact that gaseous substances are formed during the working process. Consequently, an end-grain surface that has been worked in accordance with the invention does not solely exhibit open lumens into which glue and paint, for instance, can penetrate, but also reaction-friendly cell walls which have high binding potential.

The invention will now be described in more detail with reference to the accompanying drawings, in which
- Fig. 1: illustrates a first embodiment of inventive apparatus;
- Figs. 2A, 2B: show the result obtained in tests carried out with the apparatus shown in Fig. 1;
- Fig. 3: illustrates a second embodiment of an inventive apparatus;
- Fig. 4: shows the result obtained with tests using the apparatus shown in Fig. 3;
- Fig. 5: illustrates a third embodiment of an inventive apparatus;
- Fig. 6: shows the result obtained when ablating in one corner; and
- Fig. 7: is a schematic diagram of binding energies in electron volts in relation to a laser wavelength within the UV range.

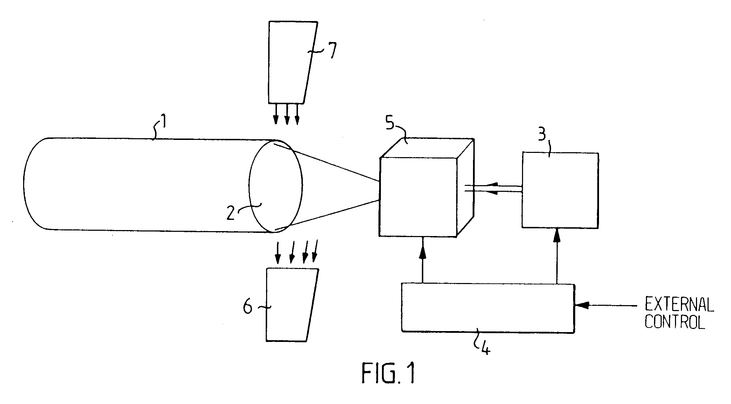

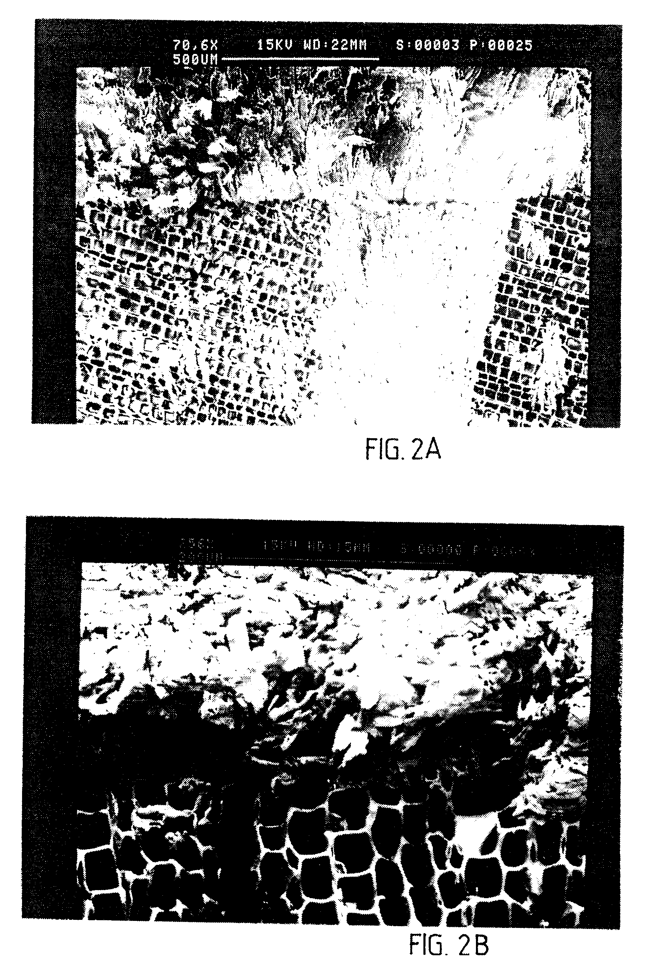

Shown in Fig. 1 is a piece of wood having an end-grain surface first obtained by sawing the wood mechanically in a typical manner. The upper parts of Figs. 2A and 2B are magnified views of the surface structure of the sawn end surface. A pulsed laser 3, e.g. an IR or an excimer-type laser, is controlled by a control device 4 to emit the number of pulses that have been found adequate for the type of wood concerned and whose surface shall be worked, this adequate number of pulses being determined by preparatory tests. It is assumed here that the wood surface shall be worked and prepared for gluing the surface to another surface, for instance to enable a number of wood pieces to be glued together. It will be noted that a very durable glue joint is obtained when gluing together wood pieces that have been prepared in accordance with the inventive method, therewith obviating the need to scarf or splice the surfaces.

According to the invention, the energy of each laser pulse at the impingement surface will be so high that particularly those fibres that have been damaged in the mechanical working process will be partially vapourized and loosened from the surface and fly away. This is an important feature of the inventive concept. The radiation energy required with each pulse is dependent on the wavelength of the radiation used, although it is also dependent, for instance, on the type of wood concerned and on other properties of the wood, for example the extent to which the wood has been dried and the structure of the surface prior to light treatment.

A good estimation is that the pulse energy should in the majority of cases be 1J/cm² or thereabove for a light wavelength of about 240 nm. Higher energies are required for longer wavelengths, such as wavelengths within the IR range or the visible light range. The pulse frequency is preferably relatively low, for instance between 1-300 Hz, preferably between 10-50 Hz. The pulses are very short in relation to the pulse interspaces (e.g. in the order of 1-10 nsec).

The number of treatment pulses per unit of surface area can also vary strongly in dependence on the structure of the unworked or untreated surface, even when the surface is an end-grain surface or a surface which follows the grain. It will be noted that the use of an excimer laser results in a lower sensitivity to correct adjustment of the pulse energy, since heat fusion of illuminated material on the surface is less likely at UV-wavelengths than at IR-wavelengths, for instance. On the other hand, it is necessary to have a sufficiently high pulse energy per unit of surface area when treating with an IR laser, in order to prevent burning of the surface and clogging of the pores. From the aspect of working safety, however, an IR laser or a visible light laser are easier to handle and are therefore preferred.

The control device 4 also controls an optic unit 5 which directs the laser beam from the laser 3 so that the whole of the surface to be worked is irradiated.

The optic unit 5 is able to operate in a number of different ways. When there is access to sufficiently high laser energy, the optic unit is able either to diverge the rectangular beam from the laser 3 so that the beam will cover the surface, or it can cause the beam to sweep the surface incrementally, or it can divide the beam into a plurality of juxtaposed, transmitted parallel beam bundles, or it may also coordinate radiation from a number of similar lasers 3 (not shown) so that their radiated beam rays will impinge on the end surface to be worked in a juxtaposed fashion, so that the whole of the wood surface 2 will be impinged upon by an homogenous beam with each pulse. A plurality of lasers may also be controlled sequentially. Arrangements for beam diversion, beam sweeping, beam division and for directing beams in a desired direction are well known to the skilled person and need not therefore be described in detail here.

When irradiating wood material and therewith breaking covalent bonds therein, both dust and gaseous substances are generated. Consequently, a gas and a dust suction arrangement 6 will preferably be positioned adjacent the worked surface of the wood in order to carry away these gases. The arrangement 6 is stylized in Fig. 1, where it is shown positioned on one side of the wood surface 2, although it will be understood that a gas suction arrangement may instead be arranged around the wood surface for the purpose of carrying away the gases in an effective and positive fashion.

Particularly when using IR-type lasers, it is important that the particles loosened from the irradiated surface are positively carried away from the surface, so that said particles will not settle on the surface and fuse thereto. Consequently, in addition to the gas and dust suction arrangement or as an alternative thereto, there may be provided a blowing arrangement 7 (stylized in Fig. 1) which will function to blow clean the wood surface during the laser treatment process. Either the blowing arrangement or the suction arrangement, or both arrangements, may operate with a pulsating effect, so as to further increase the possibility of truly carrying away from the surface all material that has been loosened thereon.

Figs. 2A and 2B show different magnifications of one and the same wood surface obtained in tests carried out with the invention. A razor blade was placed on the surface with the intention of partially screening-off the surface, namely the upper part in Figs. 2A and 2B, in order to provide a clear indication of the appearance of the surface both before and after treating the surface in accordance with the invention. The lower part of the illustrated surface shows clearly the undamaged cell structure of the surface ablated by the pulsated radiation. It is evident from these images, or pictures, that glue and paint will be able to adhere effectively in the wood, by being sucked into the open cells. The open cell structures also often have a slightly rough inner surface, which affords still better adhesion for glue and paint.

Coniferous wood was used in the test. The radiation source used was an excimer laser having a wavelength of 248 nm and a radiation energy of 900 mJ/cm²/pulse with a beam area of a 55 mm². The test piece shown in Figs. 2A and 2B is a piece of pine wood and was irradiated with 100 pulses.

It was observed when carrying out the tests that radiation effected in this way acts more effectively on spring wood than on autumn wood. Different types of wood also react differently. Consequently, the external control to the control device should, among other things, provide information relating to the type of wood concerned and also other data relevant to the wood to be treated, for instance whether the wood was taken in the spring or in the autumn, the length of time the wood had been in storage before being treated, the extent to which the wood has been dried, etc. The control device 4 may also have stored therein information relating to the photon energy that is required in the different instances, and therewith, for instance, appropriate focusing of the beam and/or the appropriate number of pulses that are required to treat the wood surface concerned effectively.

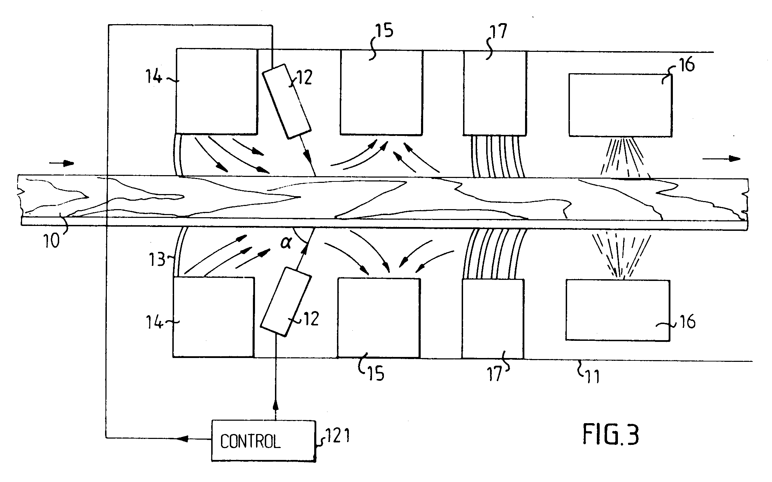

In the case of the embodiment shown in Fig. 3, painted planks or timber is produced with the aid of the inventive method. A sawn plank 10 is fed into a closed space 11 in which a number of lasers 12 are positioned and directed so that the light emitted thereby will be projected obliquely in relation to the normal plane of the plank, at an angle α. The closed space 2 is screened from the surroundings by a resilient input port 13 or the like, through which the plank is fed into the space. Excimer lasers, for instance, can therefore be used advantageously in this embodiment, even though IR lasers should perhaps be used in practice from the safety aspect. The lasers 12 may have a relatively broad beam in a direction transversely to the plank, and the number of beams used is determined by how well the laser beams cover the plank. Alternatively, a single laser which is moved around the plank during the treatment process may be used. It is also conceivable to use a few lasers which are moved reciprocatingly in the peripheral direction of the plank. The lasers 12 are controlled by an electronic control device 121, both with regard to pulse emission and movement patterns, and also with regard to coordinating the lasers with the movement of the plank through the space 11.

Each laser is positioned obliquely at said angle α so that at the same time as the damaged outer layer is removed from the plank, the loosened and often pulverized or atomized material will be directed away from the laser beam and not be located within said beam, which would reduce the working effect of the beam on the wood surface. A stream of air is also directed along the working regions, from a blowing device 14 to a suction device 15, so as to quickly carry away all particles and gases in the same direction as the worked material sputters away under the effect of the laser radiation. The suction device 15 may include filter means for separating particles and harmful gases from the air stream, prior to the air stream being released to the surroundings or recycled over the working area.

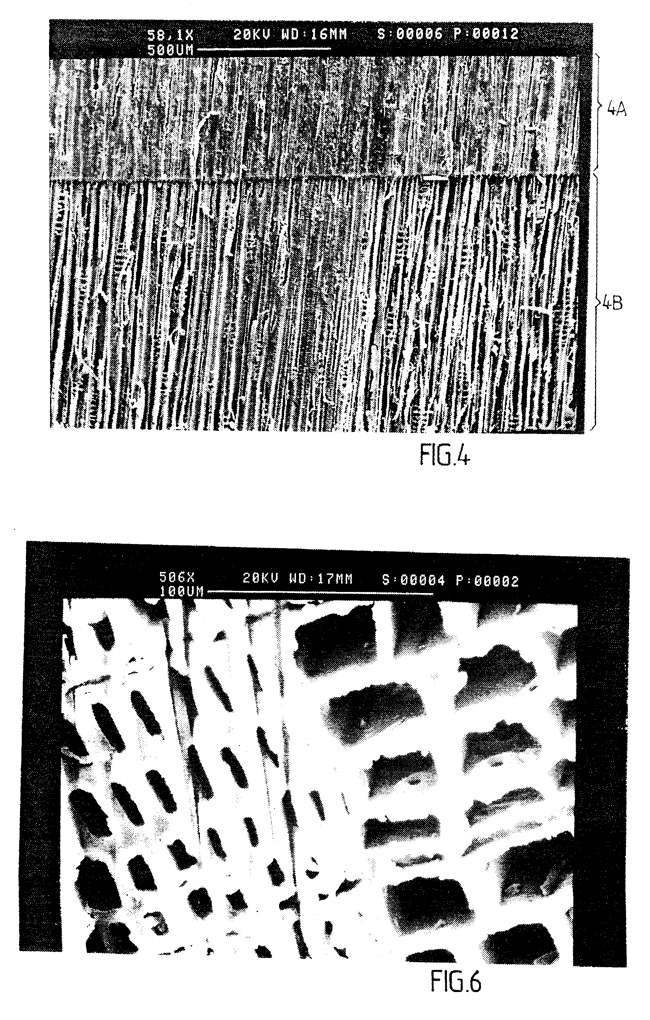

Fig. 4 is a photograph of the surface structure of a plank, where the upper part 4A of the Figure shows the surface structure prior to laser treatment and the lower part 4B shows the surface structure after laser treatment. It is clearly seen that the laser treatment results in an open pore surface structure, even in the direction of the wood fibres, where applied glue, plastic, paint or the like can be sucked in and obtain a highly effective anchorage. Pulsated UV radiation with solely 20 pulses and a pulse frequency of 50 Hz was used in the test represented in Fig. 4.

For the best result, e.g. when applying paint, the paint should be applied before there has been time for the air to have an oxidizing effect on the exposed surface of the wood. In this case, the plank may be dried prior to treatment, so that the exposed wood cells will not contain liquid to an extent which would prevent paint penetrating the surface. In the case of the embodiment illustrated in Fig. 3, the plank 10 is passed to a painting station 16, in which the plank is spray-painted, for instance. The plank is also allowed to pass through some type of screening means 17 also in this case, in this instance mostly to prevent to some extent air being drawn by suction from the plank outlet end of the closed space 11 and influencing the paint-spraying operation. The screening means 17 may also have a plank-brushing facility which functions to brush the plank clean prior to painting the same. It is also feasible to include in this station means for removing by suction the possible interior moisture content of the exposed cells in the plank, when the plank has not been dried prior to the process. It will be noted that the various units have only been stylized in the Figures, more to illustrate their different functions than to show their actual configurations.

The inventive method and inventive apparatus can be used to treat surfaces of different shapes. It should be possible for paint and glue to obtain a good anchorage even in corners and like places of a structure. It shall also be possible to treat wood of different shapes individually. It is possible to provide a moving conveyor of a similar type to that shown in Fig. 3, where workpieces secured to a moving working path can be passed through the various stations.

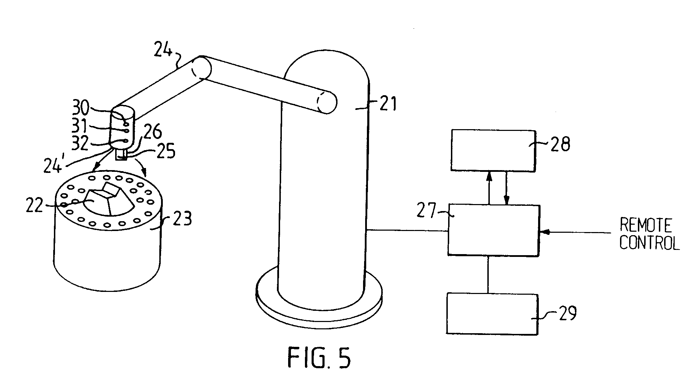

However, Fig. 5 illustrates another embodiment which, in this case, includes a robot 21 which is intended to treat a workpiece 21 secured to a suction table. The upper surface of the table includes a plurality of holes. Air is sucked through the holes by means of a fan (not shown) placed within the table. A workpiece placed on the table is held firmly thereto by suction, so as to be held in place. The robot includes an arm 24 which is hinged so that the outermost end of the arm is able to move between three-dimensional positions in space. Mounted on the outer end of the arm is a light source 25, such as a laser. The outer end of the arm may also be supplied with compressed air 24' which flows out around the laser 25. The outer end of the arm may also carry an additional light source 26, optionally placed immediately adjacent the laser 25.

Prior to treatment, an operator is able to ignite the additional light source 26 and move the arm 24 around the workpiece 22 such that each part of the workpiece will be illuminated as the light source moves. The robot 21 includes a control unit 27, in the form of a computer having a memory 28 for storage of the operator movement patterns, and with a keyboard 29 for controlling the control unit 27 and for keying-in individual data relating to the type of wood from which the workpiece is made, etc.

After writing the movement pattern into the memory 26, which may be either a temporary memory or a fixed but re-programmable memory, EEPROM, the operator can leave the area in which the robot and the workpiece are located and, from another area, activate the robot to perform the programmed movement pattern, but with the pulsated laser 25 activated in concert with a strong suction force from the suction table 23 and blowing air over the workpiece from the outer end of the arm 24. The control unit 27 is programmed to calculate the requisite number of light pulses per unit of surface area, etc., on the basis of workpiece-related data, and optionally also to make corrections with regard to the programmed movement pattern in order to ensure that the surface of the workpiece will obtain as homogenous light pulse treatment as possible.

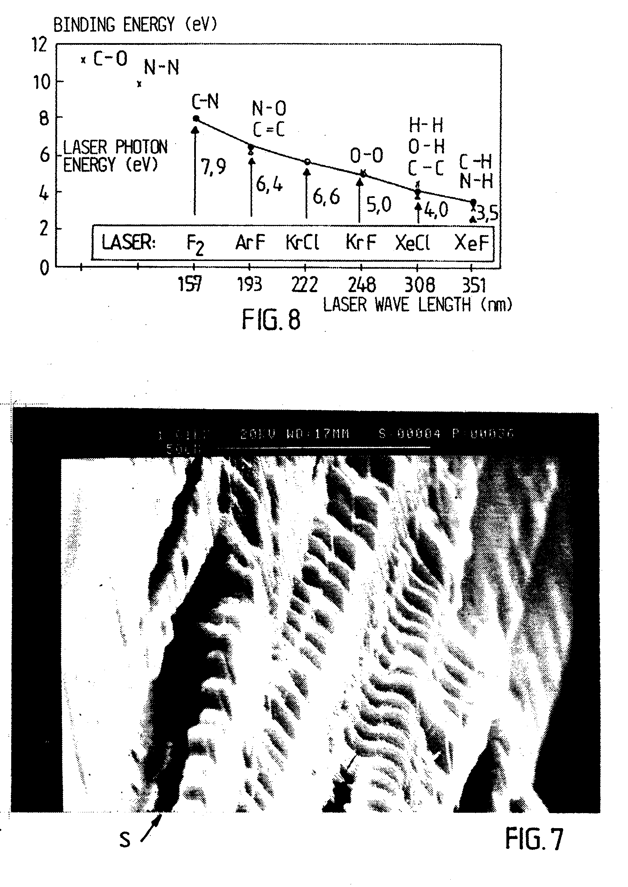

Fig. 6 is a magnified image, or picture, showing the result obtained when ablating the interior of a corner structure. The Figure shows the exposed cell structure clearly, partly transverse to the fibre direction of the wood and partly along the fibre direction.

The number of treatment pulses that are required may differ with different properties of the wood. Accordingly, the end of the arm 24 may be provided with a number of keys 30, 31, 32, or the like, by means of which the operator can indicate whether the illuminated side of the workpiece is end-grain or wood in the fibre direction, or whether the surface is inclined to these directions, and the computer can then calculate an appropriate number of light pulses per unit of surface area for the different sides concerned.

Tests were carried out on a pine test piece. The radiation source used was an excimer laser having a wavelength of 248 nm and a radiation energy of 100 Mj/cm²/pulse and a beam area of 55 mm², but converging to a target area of 6 mm².

The deformed and/or compressed fibre fragments in wood include crushed zones which when placed under tension in connection with deformations, caused for instance by moisture movements or external loads, can give rise to stress concentrations where cracks can be initiated. Fig. 7 illustrates the ablation of a surface in which the formation of a crack zone has commenced, at S, but where further crack formation is arrested after the ablation. In order to further arrest crack formation with the aid of the inventive ablating method, the laser treatment may optionally be continued for a longer period of time than that required solely to expose a surface so as to remove wood down to a deeper layer than that to which a crack or cracks have not yet reached or where crack formation at this depth is insignificant, and to obtain an insignificantly affected surface.

Fig. 8 is a schematic diagram which illustrates that the chemical bonds of many molecules can be broken through the alternating effect of one single photon with a suitable excimer laser wavelength and laser photon energy at different wavelengths and the gas in the laser which produces the different wavelengths. It is evident herefrom that excimer lasers, at least between 157 and 351 nm, can be used to break the covalent bonds in the material present in the wood. The excimer laser generating radiation energy with a wavelength of 248 nm, which was the laser used when testing the invention, is the type of excimer laser most available commercially.

However, it will be seen from the diagram shown in Fig. 8 that, from an energy aspect, it is favourable to chose an excimer laser which has a wavelength of 157 nm or a still shorter wavelength, since the laser photon energy increases with decreasing laser wavelengths. However, visible or IR lasers, particularly of the near infrared type, can be used in practice, since these types of lasers provide a natural warning to a user that the laser is activated, whereas an excimer laser may cause injury without pre-warning.

It will also be noted that the use of laser light radiation is not a necessary feature of the invention, since the inventive method is not limited to the use of coherent and/or monochromatic radiation. However, the light source should generate with each pulse a radiation energy which is so great as to make a laser the natural choice.

It will also be understood that many modifications are possible within the scope of the invention as defined in the following Claims.

## Claims

1. A method of providing from a mechanically worked wood surface a surface having an effective anchorage for glue and/or coatings, such as paint, and/or to arrest commenced crack formations, **characterized** by irradiating the wood surface with pulsated light of such high light strength per pulse, depending on the individual qualities of the wood and the wavelength of the light used, as to break covalent bonds in the irradiated material along the irradiated surface of the wood, and with a sufficient number of pulses to remove damaged surface cell structure at least to a depth exposing the cell structure of the surface.

2. A method according to Claim 1, **characterized** by irradiating the surface at an angle thereto, e.g. obliquely to or transversely to the surface, with pulsated light having a wavelength chosen from infrared to ultraviolet, until tracheids along the wood surface have been ablated.

3. A method according to Claim 1 or Claim 2, **characterized** by irradiating the surface with pulsated UV laser light, e.g. light from an excimer laser.

4. A method according to any one of the preceding Claims, **characterized** by generating an air stream with the intention of removing from the treated wood surface material that has been loosened and/or pulverized, atomized, when irradiated with said light.

5. A method according to any one of the preceding Claims, **characterized** by effecting the pulsed light treatment of the wood surface to a depth where crack formation is insignificant.

6. Apparatus for providing from a mechanically worked wood surface a surface which will provide a good anchorage to glue and/or coatings, such as paint, and/or with which commenced crack formation is arrested, **characterized** by
(a) radiation source (3) which generates pulse radiation of such high strength as to break covalent bonds in the wood material at the wavelength of the light used and in dependence on the nature of the wood in the surface concerned, with the radiated light being directed towards the wood on which the aforesaid surface shall be produced; and
(b) control means (4) for regulating the irradiation of the surface by the beam source, at least with regard to the number of radiation pulses required to expose the cell structure of said wood surface.

7. Apparatus according to Claim 6 for treating a wood surface that has already been worked mechanically, **characterized** by an optic unit (5) which is controlled by the control means (4; 12; 27) to direct the beam source at an angle to the wood surface and to deliver during a treatment process the treatment intensity and the pulse number required to ablate different parts of the wood surface.

8. Apparatus according to Claim 6 or Claim 7, **characterized** by a gas suction means (6; 15; 23) mounted in the proximity of the location where treatment of the wood takes place.

9. Apparatus according to any one of Claims 6-8, **characterized** by a blowing means (7; 14; 24') mounted in the proximity of the location where treatment of the wood takes place.

10. Apparatus according to any one of Claims 6-9, **characterized** in that the control means (4) functions to control the beam source so that treatment of the treated surface will penetrate at least to a depth at which crack formation is insignificant.

## Patentansprüche

1. Verfahren zum Bereitstellen einer Fläche ausgehend von einer mechanisch bearbeiteten Holzfläche mit einem wirksamen Verankerungsvermögen für Klebstoff und/oder Beschichtungen, wie etwa einem Anstrich, und/oder zum Blockieren angefangener Rißbildungen, gekennzeichnet durch Bestrahlen der Holzfläche mit gepulstem Licht derart hoher Lichtstärke pro Impuls, abhängig von den individuellen Qualitäten des Holzes und der Wellenlänge des verwendeten Lichts, daß kovalente Bindungen in dem bestrahlten Material entlang der bestrahlten Fläche des Holzes zerbrochen werden, und mit einer ausreichenden Anzahl Impulsen, um eine beschädigte Oberflächenzellstruktur zumindest auf eine Tiefe zu entfernen, daß die Zellstruktur der Fläche freigelegt ist.

2. Verfahren nach Anspruch 1, gekennzeichnet durch Bestrahlen der Oberfläche unter einem Winkel zu dieser, beispielsweise schräg zu oder quer zu der Fläche mit gepulstem Licht mit einer Wellenlänge, die aus dem Infraroten oder Ultravioletten gewählt ist, bis Tracheide entlang der Holzfläche ablatiert sind.

3. Verfahren nach Anspruch 1 oder 2, gekennzeichnet durch Bestrahlen der Fläche mit einem gepulsten UV-Laserlicht, beispielsweise Licht von einem Excimer-Laser.

4. Verfahren nach einem der vorangehenden Ansprüche, gekennzeichnet durch Erzeugen eines Luftstroms mit der Absicht, von der behandelten Holzfläche Material zu entfernen, das bei Bestrahlung mit Licht abgelöst und/oder pulverisiert wurde.

5. Verfahren nach einem der vorangehenden Ansprüche, gekennzeichnet durch Bewirken einer Behandlung der Holzfläche mit gepulstem Licht bis auf eine Tiefe, Wo Rißbildung insignifikant ist.

6. Vorrichtung zum Bereitstellen einer Fläche ausgehend von einer mechanisch bearbeiteten Holzfläche mit einem wirksamen Verankerungsvermögen für Klebstoff und/oder Beschichtungen, wie etwa einem Anstrich, und/oder zum Blockieren angefangener Rißbildungen, gekennzeichnet durch
a) eine Bestrahlungsquelle (3), welche gepulste Bestrahlung mit einer derartigen Stärke erzeugt, daß kovalente Bindungen in dem Holzmaterial bei der Wellenlänge des benutzten Lichts und abhängig von der Natur des Holzes in der betroffenen Fläche zerbrochen werden, wobei das ausgestrahlte Licht in Richtung auf das Holz gerichtet ist, auf welchem die vorstehend genannte Fläche erzeugt werden soll, und
b) eine Steuereinrichtung (4) zum Regeln der Bestrahlung der Fläche durch die Strahlquelle zumindest in bezug auf die Anzahl an Strahlungsimpulsen, die erforderlich sind, um die Zellstruktur der Holzfläche freizulegen.

7. Vorrichtung nach Anspruch 6 zum Behandeln einer Holzfläche, die bereits mechanisch bearbeitet worden ist, gekennzeichnet durch eine optische Einheit (5), die durch die Steuereinrichtung (4, 12, 27) gesteuert ist, um die Strahlquelle unter einem Winkel auf die Holzfläche zu richten, und um während eines Behandlungsvorgangs die Behandlungsintensität und die Impulsanzahl zu liefern, die erforderlich sind, um unterschiedliche Teile der Holzfläche zu ablatieren.

8. Vorrichtung nach Anspruch 6 oder 7, gekennzeichnet durch eine Gassaugeinrichtung (6, 15, 23), die in der Nachbarschaft der Stelle angebracht ist, wo eine Behandlung des Holzes stattfindet.

9. Vorrichtung nach einem der Ansprüche 6 bis 8, gekennzeichnet durch eine Blaseinrichtung (7, 14, 24'), die benachbart zu der Stelle angebracht ist, wo die Behandlung des Holzes stattfindet.

10. Vorrichtung nach einem der Ansprüche 6 bis 9, dadurch gekennzeichnet, daß die Steuereinrichtung (4) dazu dient, die Strahlquelle derart zu steuern, daß die Behandlung der behandelten Oberfläche zumindest auf eine Tiefe vordringt, in welcher Rißbildung insignifikant ist.

## Revendications

1. Procédé pour obtenir à partir d'une surface en bois usinée mécaniquement une surface ayant un ancrage efficace pour de la colle et/ou des revêtements, tels que de la peinture, et/ou pour arrêter la formation de fissures commencées, caractérisé par l'étape qui consiste à irradier la surface de bois de lumière pulsée d'intensité lumineuse par impulsion si élevée, en fonction des qualités individuelles du bois et de la longueur d'onde de la lumière utilisée, qu'elle casse des liaisons covalentes dans le matériau irradié le long de la surface irradiée du bois, et avec un nombre suffisant d'impulsions pour éliminer des structures cellulaires de surface endommagées au moins jusqu'à une profondeur mettant à nu la structure cellulaire de la surface.

2. Procédé suivant la revendication 1, caractérisé par le fait d'irradier la surface suivant un angle, par exemple obliquement ou transversalement à la surface, de lumière pulsée ayant une longueur d'onde choisie entre l'infrarouge et l'ultraviolet, jusqu'à ce que des trachéides de long de la surface de bois aient été enlevées par ablation.

3. Procédé suivant la revendication 1 ou 2, caractérisé par le fait d'irradier la surface de lumière laser U.V. pulsée, par exemple de la lumière provenant d'un laser excimère.

4. Procédé suivant l'une quelconque des revendications précédentes, caractérisé par le fait de produire un courant d'air avec l'intention d'évacuer de la surface de bois traitée du matériau qui a été relâché et/ou pulvérisé, atomisé, lorsqu'il a été irradié de la lumière.

5. Procédé suivant l'une quelconque des revendications précédentes, caractérisé par le fait d'effectuer le traitement de lumière pulsée de la surface de bois jusqu'à une profondeur où la formation de fissures est insignifiante.

6. Dispositif pour obtenir à partir d'une surface de bois usinée mécaniquement une surface qui assurera un bon ancrage à de la colle et/ou des revêtements, tels que de la peinture, et/ou avec lequel la formation de fissures commencées est arrêtée, caractérisé par
(a) une source (3) de rayonnement qui produit un rayonnement pulsé d'une intensité si élevée qu'elle casse des liaisons covalentes dans le matériau de bois à la longueur d'onde de la lumière utilisée et en fonction de la nature du bois dans la surface concernée, la lumière qui est irradiée étant dirigée vers le bois sur lequel la surface mentionnée précédemment doit être produite ; et
(b) des moyens (4) de commande destinés à réguler l'irradiation de la surface par la source faisceau, au moins en ce qui concerne le nombre d'impulsions de rayonnement nécessaires pour mettre à nu la structure cellulaire de la surface de bois.

7. Dispositif suivant la revendication 6, destiné à traiter une surface de bois qui a déjà été usinée mécaniquement, caractérisé par une unité (5) optique qui est commandée par les moyens (4; 12; 27) de commande pour diriger la source de faisceau suivant un angle par rapport à la surface de bois et pour envoyer pendant un processus de traitement l'intensité de traitement et le nombre d'impulsions nécessaires pour effectuer une ablation de différentes parties de la surface de bois.

8. Dispositif suivant la revendication 6 ou 7, caractérisé par des moyens (6; 15; 23) d'aspiration de gaz qui sont montés à proximité de l'emplacement où le traitement du bois a lieu.

9. Dispositif suivant l'une quelconque des revendications 6 à 8, caractérisé par des moyens (7; 14; 24') de soufflage qui sont montés à proximité de l'emplacement où le traitement du bois a lieu.

10. Dispositif suivant l'une quelconque des revendications 6 à 9, caractérisé en ce que les moyens (4) de commande fonctionnent de manière à commander la source de faisceau de sorte que le traitement de la surface traitée va avoir lieu au moins jusqu'à une profondeur à laquelle la formation de fissure est insignifiante.
